# EUROPÄISCHE PATENTSCHRIFT

(11) **EP 0 405 109 B1**
(45) Veröffentlichungstag und Bekanntmachung des Hinweises auf die Patenterteilung: **30.06.1993**
(21) Anmeldenummer: 90109090.2
(22) Anmeldetag: 15.05.1990
(51) Int. Cl.: B60G 21/055, F16F 1/16

(54) **Torsionsstab**
Torsion bar
Arbre de torsion

(30) Priorität: 30.06.1989 DE 3921457
(43) Veröffentlichungstag der Anmeldung: 02.01.1991
(73) Patentinhaber: Fried. Krupp AG Hoesch-Krupp, 44145 Dortmund (DE)
(72) Erfinder: Neuhaus, Ulrich, Dipl.-Ing., D-5860 Iserlohn 7 (DE); Schmidt, Hans-Peter, Dipl.-Ing., D-5800 Hagen 5 (DE)

(56) Entgegenhaltungen:
- FR-A- 2 600 735
- GB-A- 650 944
- US-A- 2 082 509
- US-A- 2 824 750

## Beschreibung

Die Erfindung bezieht sich auf eine Torsionsstabanordnung für Kraftfahrzeuge nach dem Oberbegriff des Anspruches 1.

Aus der GB-A-650 944 ist eine derartige Torsionsstablagerung bekannt, bei der das auf dem Torsionsstab angeordnete Lager mittels daran axial befestigter Scheiben als Widerlager in Axialrichtung auf dem Torsionsstab gesichert ist, wobei die Scheiben auf dem Torsionsstabrücken mit diesem verschweißt, verklemmt oder verstemmt sind.

Die durch das Verstemmen hervorgerufene Oberflächenbeschädigung des Torsionsstabes und damit verbundene Kerbwirkung kann bei schwingender Beanspruchung zu Lebensdauerproblemen führen. Auch beim Verschweißen von Ringen, gerade beim Einsatz von Federstählen für Torsionsstäbe, kann es zu nachteiligen metallurgischen Auswirkungen kommen. Darüber hinaus ist es notwendig, jeweils abhängig von der Kontur des Torsionsstabes, die Scheibe auf den unverformten Torsionsstab aufzubringen, weil die geringen Toleranzen zwischen dem Bohrungsdurchmesser der Scheibe und dem Außendurchmesser des Torsionsstabes ein nachträgliches Aufschieben der Scheibe auf den Torsionsstab verhindern, insbesondere wenn die Scheibe über den gekrümmten Teil des Torsionsstabes geschoben werden muß.

Ferner muß das Verstemmen oder Verschweißen vor dem Kugelstrahlen und dem Lackieren durchgeführt werden, was zu Lebensdauer- und Korrosionsproblemen führen kann. Bei sogenannten warmausgeformten Stäben, die in den meisten Fällen im Anschluß an die Formgebung direkt vergütet werden, hat das Verstemmen von Scheiben nach der Vergütung zu erfolgen.

Die FR-A-2 600 735 zeigt die Lagerung eines Stabilisators, wobei der Stabilisator mit seinem Rückenbereich von einem Lager mit eingelegtem elastischen Material aufgenommen wird. Dabei ist der Stabilisator im Bereich der Rückenlagerung mit einer kreisförmig angebrachten Nut versehen. Das elastisch gehaltene Material schmiegt sich durch Druck, der durch die spezielle Lagerkonstruktion aufgebracht wird, der Nutform D an, so daß eine hemmende Wirkung gegeben ist und der Stabilisator gegen Bewegung in axialer Richtung gesichert ist.

Die bei Einfederung auftretende Drehbewegung des Stabilisators in den Lagerstellen wird konstruktionsbedingt (Gummi-Metall-Gummi-Lager) im Lager selbst ausgeglichen.

Der Erfindung liegt daher die Aufgabe zugrunde, eine Torsionsstabanordnung der eingangs genannten Art zu schaffen, bei der eine Beeinträchtigung der Oberfläche und des Querschnittes des Torsionsstabes bzw. eine Verminderung des Torsionswiderstandes wesentlich kleiner ausfällt als bisher, wobei das Widerlager am fertigen Torsionsstab, d. h. nach dem Lackieren angebracht werden kann.

Diese Aufgabe wird durch die im kennzeichnenden Teil des Patentanspruches 1 angegebenen Merkmale gelöst.

Durch die Verwendung von Formschlußverbindungselementen in der beanspruchten Art am Widerlager ist eine Störung der Oberfläche des Torsionsstabes und eine unkontrollierte Schwächung seines Querschnittes weitgehend ausgeschaltet. Dies um so mehr, als die Vertiefungen im Torsionsstab bereits bei dessen spanloser Umformung in den Endform mit eingeformt werden können, so daß auch der Faserverlauf im Werkstoff nicht unterbrochen wird, was sich - bei selbstverständlich kleinstmöglicher Form der Vertiefungen - zusätzlich günstig auf die Dauerhaltbarkeit auswirkt.

Damit das Widerlager ohne weiteres auch über den gekrümmten Teil des Torsionsstabes geschoben werden kann, ist das Widerlager mit mindestens einem sich radial erstreckten Schlitz und am Innenumfang mit einer Kerbe versehen, so daß das Widerlager aufgeklappt und radial auf den Torsionsstab aufgeschoben werden kann.

Vorteilhaft ist es ferner, das Widerlager auf dem Torsionsstab mittels eines Form- und/oder Kraftschlußelementes (Klemme) in Radialrichtung zu sichern. Das Formschlußelement kann als verformbare Klemme (z. B. als Ohr-Klemme) ausgebildet sein, wobei die Klemme sich stufenlos einstellen läßt.

In weiterer Ausgestaltung der Erfindung ist es vorteilhaft, daß beispielsweise das Lager mit einer zylinderförmigen Aussparung versehen ist, die über den Außenumfang des geteilten Widerlagers geschoben werden kann, um somit das Widerlager auf dem Torsionsstab zu sichern.

In der nachfolgenden Beschreibung sind mehrere Ausführungsbeispiele des Erfindungsgegenstandes näher erläutert.

Es zeigt:
- Fig. 1: eine Teildarstellung eines Torsionsstabes mit den erfindungsgemäßen Widerlagern, gegen die sich die auf den Torsionsstab aufgebrachten Lager in Axialrichtung abstützen können,
- Fig. 2: eine Schnittdarstellung des Widerlagers mit der zugehörigen, auf den Außenumfang des Widerlagers aufgeschobenen Klemme,
- Fig. 3: ein geteiltes Widerlager mit am Innenumfang des Widerlagers vorgesehenen Wülsten als Rastelement,

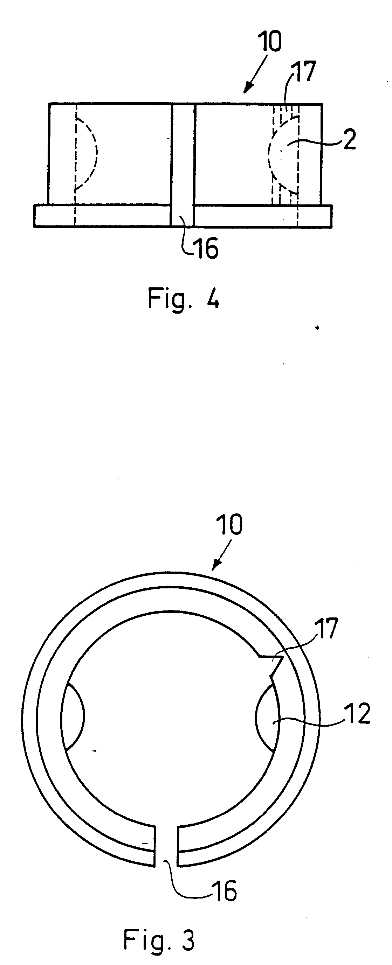

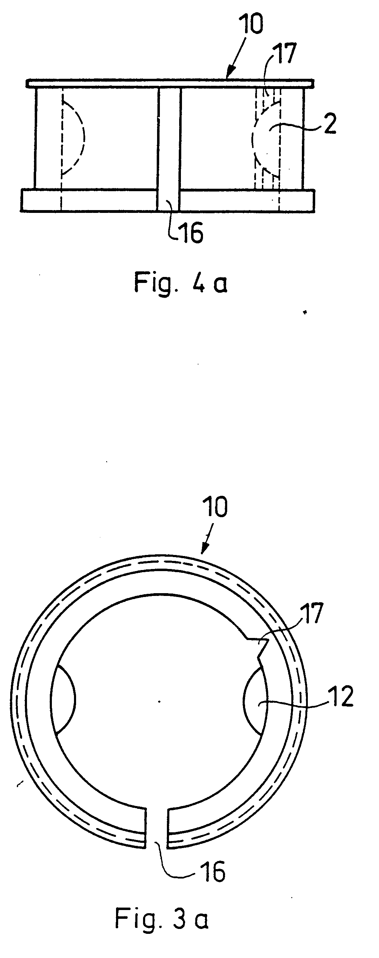

- Fig. 3 a: ein weiteres Ausführungsbeispiel eines Widerlagers,
- Fig. 4: eine Draufsicht des Widerlagers gemäß Fig. 3,
- Fig. 4 a: das weitere Ausführungsbeispiel eines Widerlagers gemäß Fig. 3 a in Draufsicht,

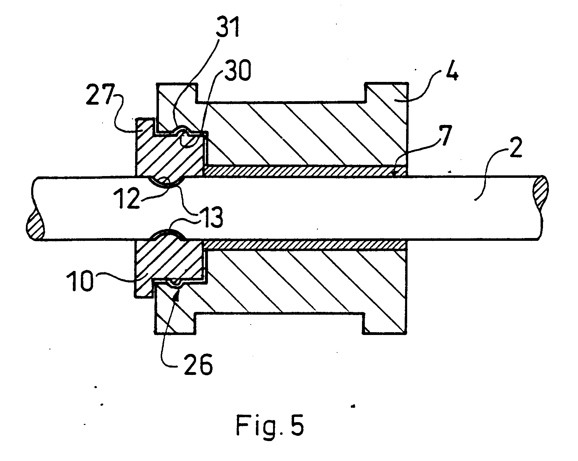

- Fig. 5: ein weiteres Ausführungsbeispiel einer Sicherung des Widerlagers mittels eines Lagers,

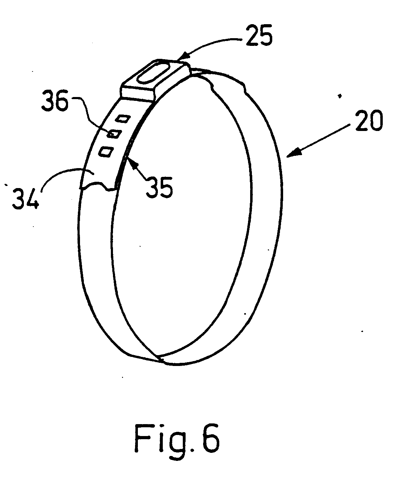

- Fig. 6: eine stufenlos einstellbare Klemme.

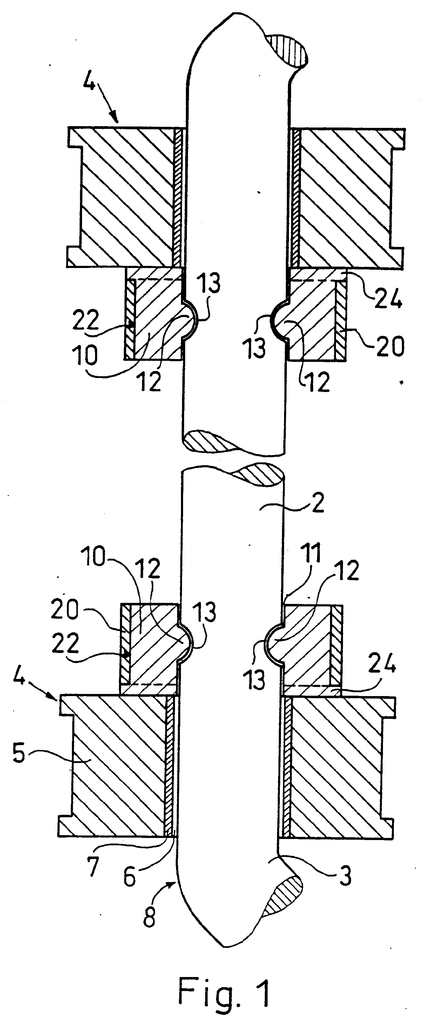

In der Zeichnung ist in Fig. 1 mit 2 ein nur teilweise dargestellter Torsionsstab für ein Kraftfahrzeug bezeichnet, der endseitig mit in der Zeichnung nur teilweise angedeuteten abgewinkelten Schenkeln 3 ausgerüstet ist. Im Bereich der Schenkel 3 befindet sich ein Lager 4, das aus einem elastischen Teil 5 besteht, in dessen Bohrung 6 eine Hülse 7 eingezogen ist. Die Hülse 7 kann beispielsweise aus Kunststoff ausgebildet sein, um eine Drehbewegung des Torsionsstabes im Lager 4 zu garantieren und um eine Beschädigung der Oberfläche des kugelgestrahlten und lackierten Torsionsstabes durch Reibung zu vermeiden.

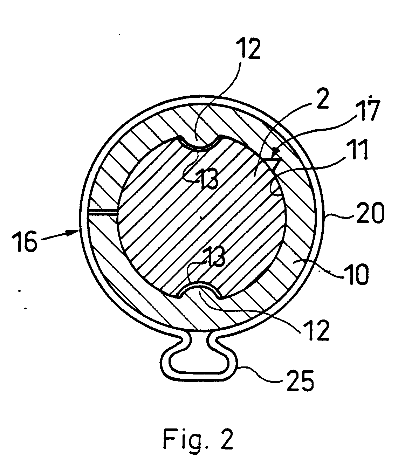

Damit eine gegenseitige Verschiebung zwischen Torsionsstab 2 und Lager 4 verhindert wird, befindet sich neben dem jeweiligen Lager 4 ein Widerlager 10, das als zylinderförmiger Ring, gefertigt aus elastischem Werkstoff, ausgebildet ist und eine Bohrung 11 aufweist, die gleich oder etwas kleiner ist als der Durchmesser des Torsionsstabes 2. Am Innenumfang der Bohrung 11 des Widerlagers 10 befinden sich diametral gegenüberliegend angeordnete Rastelemente bzw. Wülste oder Noppen 12, die in entsprechende im Torsionsstab 2 angeordnete Vertiefungen 13 eingerastet sind. Durch die am Innenumfang des Widerlagers 10 vorgesehenen Wülste 12 und die im Torsionsstab 2 vorgesehenen Vertiefungen 13 erhält man gemäß Fig. 2 eine formschlüssige Verbindung.

Wie aus den Figuren 2, 3 und 4 hervorgeht, kann das Widerlager 10 mit einem sich radial erstreckenden Schlitz 16 ausgestattet sein und eine Kerbe 17 an irgendeiner Stelle des Innenumfangs der Bohrung 6 aufweisen, so daß sich das Widerlager 10 für die Montage so weit auseinanderklappen läßt, daß das Widerlager radial auf den Torsionsstab 2 aufgesteckt werden kann. Sollte jedoch ein derart weites Aufklappen des Widerlagers nicht gewünscht sein, so läßt sich jedoch das Widerlager 10 so weit nach außen biegen, daß es ohne weiteres über die Schenkel 3 und die sich daran anschließenden Krümmungen 8 des Torsionsstabes 2 schieben läßt, bis es die in Figur 1 dargestellte Lage eingenommen hat.

Nachdem das Widerlager 10 auf den Torsionsstab 2 aufgeschoben ist, kann dieses so weit zusammengedrückt werden, bis sich eine Klemme 20 auf den zylindrischen Teil 22 des Widerlagers 10 aufschieben läßt. Nachdem die Klemme 20 so weit auf den zylindrischen Teil 22 aufgeschoben ist, bis sie gegen den Kragen 24 zur Anlage kommt, wird der außenstehende Klemmteil 25 der Klemme 20 so weit zusammengepreßt, bis die Innenoberfläche der Bohrung 11 gegen die Außenoberfläche des Torsionsstabes 2 fest anliegt. Durch die form- und kraftschlüssige Verbindung über die Klemme 20 erhält man eine einwandfreie kostengünstige Befestigung des Lagers 10 auf dem Torsionsstab 2. Die Klemme 20 kann gemäß Fig. 6 auch aufklappbar sein. Ferner kann die Klemme 20 zwei übereinander schiebbare Endteile 34, 35 haben, die zur Befestigung stufenlos zusammengeschoben werden können. Die Endteile 34, 35 der Klemme 20 können mit miteinander verrastbaren Rastelementen 36 ausgestattet sein, die nach Zusammendrücken der Klemme 20 verhindern, daß sich die Endteile 34, 35 auseinanderschieben.

In einem weiteren Ausführungsbeispiel gemäß Fig. 5 ist das Lager 4 stirnseitig mit einer Aussparung 26 versehen, die zur radialen Sicherung des Widerlagers 10 auf den Außenumfang des Widerlagers 10 aufgeschoben wird, bis die Stirnseite des Lagers 4 gegen einen Kragen 27 des Widerlagers 10 anliegt. Das Widerlager 10 muß im Lager 4 drehbeweglich sein, damit der Torsionsstab 2 in der Lage ist, Drehschwingungen im Lager 4 ausführen zu können.

Das Lager 4 weist auf dem Umfang der Aussparung 26 umlaufende Rastelemente 31 auf, die mit entsprechenden auf dem Außenumfang des Widerlagers 10 angeordneten Gegenstücken 30 korrespondieren. Die Rastelemente 31 und die Gegenstücke 30 können als ringförmige Vertiefung und als Ringwulst ausgebildet sein, die miteinander in Eingriff stehen. Auf diese Weise wird eine Axialverbindung zwischen dem Lager 4 und dem Widerlager 10 geschaffen. Eine ähnliche Verbindung besteht zwischen dem Torsionsstab 2 und dem Widerlager 10, wozu ebenfalls Vertiefungen 13 zur Aufnahme von Wülsten 12 des Widerlagers 10 vorgesehen sind.

## Patentansprüche

1. Torsionsstabanordnung für Kraftfahrzeuge mit einem Torsionsstab (2) mit endseitig abgewinkelten Schenkeln (3) zum Anschluß an tragende Teile des Kraftfahrzeuges und mindestens einem zwischen den Schenkeln (3) angeordneten, auf den Torsionsstab (2) aufgeschobenen und diesen in radialer Richtung lagernden Lager (4), das gegen ein eine Axialbewegung zwischen Lager (4) und Torsionsstab (2) verhinderndes Widerlager (10) abgestützt ist, wobei das Widerlager (10) formschlüssig auf dem Torsionsstab (2) festgelegt ist, **dadurch gekennzeichnet**, daß der Torsionsstab (2) im Lager (4) gleitend gelagert ist und daß ein oder mehrere als Erhebungen ausgebildete Rastelement (12) am Innenumfang der Bohrung (6) des Widerlagers (10) vorgesehen sind, die in entsprechende im Torsionstab (2) vorgesehene Vertiefungen (13) eingreifen.

2. Torsionsstabanordnung nach Anspruch 1, dadurch gekennzeichnet, daß das Widerlager (10) mit mindestens einem sich radial erstreckenden Schlitz (16) und am Innenumfang mit einer Kerbe (17) versehen ist.

3. Torsionsstabanordnung nach Anspruch 1 oder Anspruch 2, dadurch gekennzeichnet, daß das Widerlager (10) auf dem Torsionsstabs (2) mittels einer Bandage (20) gegen radiales Aufweiten gesichert ist.

4. Torsionsstabanordnung nach Anspruch 3, dadurch gekennzeichnet, daß die Bandage (20) als verformbare Hülse bzw. Klemme (20) ausgebildet ist, die auf dem Außenumfang des Widerlagers (10) angeordnet ist.

5. Torsionsstabanordnung nach Anspruch 1, dadurch gekennzeichnet, daß das Lager (4) stirnseitig eine Aussparung (26) aufweist, in die das Widerlager eingreift.

6. Torsionsstabanordnung nach Anspruch 5, dadurch gekennzeichnet, daß auf dem Umfang der Aussparung (26) umlaufende Rastelemente (31) angeordnet sind, die mit am Außenumfang des Widerlagers (10) vorgesehenen Gegenstücken (30) korrespondieren.

7. Torsionsstabanordnung nach Anspruch 4, dadurch gekennzeichnet, daß die Klemme (20) aufklappbar und stufenlos einstellbar ist.

## Claims

1. Torsion rod arrangement for motor vehicles having a torsion rod (2) which has downwardly curved limbs (3) on the end side for connection to the load-bearing parts of the motor vehicle, the torsion rod (2) has at least one bearing (4) which is arranged between the limbs (3) and is pushed onto the torsion rod (2) and is mounted on the torsion rod (2) in a radial direction, the said bearing (4) is supported against a counter bearing (10) which prevents an axial movement between the bearing (4) and the torsion rod (2), wherein the counter bearing (10) is attached to the torsion rod (2) in a form-locking manner, characterised in that the torsion rod (2) is slideably mounted on the bearing (4) and one or more latching elements (12), which are formed as elevations, are provided on the inner periphery of the bore (6) of the counter bearing (10), the said latching elements (12) engage in the indentations (13) provided correspondingly in the torsion rod (2).

2. Torsion rod arrangement according to claim 1, characterised in that the counter bearing (10) is provided with at least one radially extending slit (16) and is chamfered (17) on the inner periphery.

3. Torsion rod arrangement according to claim 1 or claim 2, characterised in that the counter bearing (10) is secured on the torsion rod (2) by means of a binding (20) against a radial displacement.

4. Torsion rod arrangement according to claim 3, characterised in that the binding (20) is formed as a mouldable sleeve and/or clamp (20), the mouldable sleeve and/or clamp (20) being arranged on the outer periphery of the counter bearing (10).

5. Torsion rod arrangement according to claim 1, characterised in that the bearing 4 has on the front side a recess (26) into which the counter bearing engages.

6. Torsion rod arrangement according to claim 5, characterised in that circumferential latching elements (31) are arranged on the periphery of the recess (26) and the said circumferential latching elements (31) correspond with the counter pieces (30) provided on the outer periphery of the counter bearing (10).

7. Torsion rod arrangement according to claim 4, characterised in that the clamp (20) can fold open and can be continuously adjusted.

## Revendications

1. Système de barre de torsion pour véhicule à moteur, avec une barre de torsion (2) pourvue de branches d'extrémités (3) formant un angle, pour un raccordement à la partie portante du véhicule, et au moins un palier (4) disposé entre les branches (3), glissé sur la barre de torsion (2) et supportant celle-ci à rotation dans le sens radial, palier qui s'appuie sur une butée (10) empêchant un mouvement axial entre le palier (4) et la barre de torsion (2), tandis que la butée (10) est fixée mécaniquement à la barre de torsion (2), caractérisé en ce que la barre de torsion (2) est montée à glissement dans le palier (4), et un ou plusieurs éléments d'encliquetage (12) réalisés sous la forme de saillies, sont prévus à la périphérie interne de l'alésage (6) de la butée (10), et coopèrent avec des creux (13) correspondants, prévus dans la barre de torsion (2).

2. Dispositif à barre de torsion selon la revendication 1, caractérisé en ce que la butée (10) est pourvue d'au moins une fente (16) radiale, et d'une entaille (17) à la périphérie interne.

3. Dispositif à barre de torsion selon la revendication 1 ou 2, caractérisé en ce que la butée (10) sur la barre de torsion (2) est maintenue vis à vis d'une ouverture radiale au moyen d'une frette (20).

4. Dispositif à barre de torsion selon la revendication 3, caractérisé en ce que la frette (20) est réalisée sous la forme d'un manchon ou d'un collier de serrage (20) déformable, prévu à la périphérie extérieure de la butée (10).

5. Dispositif à barre de torsion selon la revendication 1, caractérisé en ce que le palier (4) présente dans sa face frontale un évidement (26) dans lequel vient se bloquer la butée.

6. Dispositif à barre de torsion selon la revendication 5, caractérisé en ce que des éléments d'encliquetage périphériques (31), qui correspondent à des éléments correspondants (30) prévus à la périphérie externe de la butée (10), sont prévus à la périphérie de l'évidement (26).

7. Dispositif à barre de torsion selon la revendication 4, caractérisé en ce que le collier de serrage (20) peut être ouvert et ajusté en continu.
